(19) Europäisches Patentamt
European Patent Office
Office européen des brevets

(11) **EP 2 942 364 A1**

(12) **DEMANDE DE BREVET EUROPEEN**

(43) Date de publication:
**11.11.2015 Bulletin 2015/46**

(51) Int Cl.:
***C08J 7/02*** (2006.01)

(21) Numéro de dépôt: **15166761.5**

(22) Date de dépôt: **07.05.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **08.05.2014 FR 1454167**

(71) Demandeur: **Benvic Europe SAS**
**21800 Chevigny-Saint-Sauveur (FR)**

(72) Inventeur: **Fringant, Christophe**
**21300 CHENOVE (FR)**

(74) Mandataire: **Agasse, Stéphane et al**
**Cabinet GERMAIN & MAUREAU**
**B.P. 6153**
**69466 Lyon Cedex 06 (FR)**

(54) **PROCÉDÉ DE TRAITEMENT D'UNE SURFACE EN POLYMÈRE COMPRENANT DU POLYCHLORURE DE VINYLE**

(57) Procédé de traitement d'une surface en polymère comprenant un polychlorure de vinyle, comprenant dans l'ordre :
- une étape de nettoyage de la surface au moyen d'une solution de nettoyage exempte de peroxyde organique et comprenant au moins un solvant organique liquide dans les conditions de nettoyage choisi parmi les esters d'acide carboxylique, la cyclohexanone, le THF, les mélanges de N,N-diméthyloctanamide et de N,N-diméthyldécanamide, et les mélanges de ceux-ci;
- une étape optionnelle de rinçage de la surface obtenue à l'issue de l'étape de nettoyage; et
- une étape de protection selon laquelle on enduit la surface obtenue au moyen d'une solution filmogène comprenant un solvant et un polymère soluble dans ce solvant.

EP 2 942 364 A1

**Description**

La présente invention a pour objet un procédé de traitement d'une surface en polymère comprenant du polychlorure de vinyle, en particulier de surfaces vieillies naturellement.

Il est connu que la coloration de la surface d'objets préparés à partir de polymères, notamment du polychlorure de vinyle (PVC), qui, au cours de leur utilisation, ont été exposés ou mis en contact avec une source dégradante telle que la chaleur, le froid, la lumière artificielle, la lumière solaire, l'obscurité, la pluie, le brouillard, l'humidité de l'air ambiant, une solution solvante, une solution détergente, peut vieillir naturellement en évoluant sensiblement par rapport à la coloration qu'avait la surface des objets neufs.

En particulier, on sait que la surface, initialement blanche, d'objets, notamment de profilés, comprenant du PVC et du dioxyde de titane, soumis à l'action de la lumière solaire, peut évoluer vers le jaune, le rouge, le rose ou le brun.

L'évolution de la coloration résulte de la dégradation du PVC, suivant des mécanismes complexes et méconnus, qui dépendent non seulement de la nature et de l'intensité des sources dégradantes mais aussi de la nature et des quantités de chacune des substances contenues dans la composition polymérique, en particulier du dioxyde de titane.

Un cas notoire est l'évolution vers une coloration à dominante rose de la surface, initialement blanche, de profilés en une composition polymérique comprenant un PVC et du dioxyde de titane. Ce phénomène, connu sous le nom de «rosissement», est souvent observé sur des profilés qui n'ont pas encore atteint leur durée de vie ordinaire (à savoir, au moins 10 ans), mais qui ont été exposés à la lumière solaire dans des conditions de faible ensoleillement et de forte humidité. Lorsque de telles conditions climatiques sont rencontrées dans une zone géographique donnée, le rosissement peut toucher un pourcentage élevé des profilés qui ont été posés dans cette zone.

Une solution à ce problème de rosissement a été proposée dans la demande de brevet internationale WO-A-2003/025050 qui décrit un procédé de traitement d'objets en PVC vieilli naturellement en surface qui comprend une étape selon laquelle on traite, à l'air ambiant, la surface des objets au moyen d'une solution organique comprenant un peroxyde organique, en particulier un peracide organique dont l'acide peracétique, et un solvant organique qui est un agent conduisant au gonflement du PVC, en particulier le dichlorométhane. La solution organique utilisée dans le procédé décrit dans cette demande de brevet présente néanmoins l'inconvénient de faire appel à du dichlorométhane qui ne répond plus aux règlementations environnementales qui ont évoluées depuis lors. Elle présente également l'inconvénient de faire appel à un peroxyde organique, en particulier à l'acide peracétique, ayant pour conséquence qu'elle se caractérise par une durée de vie limitée dans le temps et ne peut donc pas être conservée pendant un laps de temps très long. En outre, avec le remplacement des stabilisants au plomb par des stabilisants de type calcium-zinc pour la stabilisation des compositions de PVC, on a vu apparaître d'autres phénomènes de mauvais vieillissement dont les mécanismes se différencient de ceux pour lesquels les précédents développements avaient été réalisés.

Ainsi, on a constaté que la surface, initialement blanche d'objets en PVC stabilisée de cette manière, jaunit au cours du temps et que celle d'autres objets, initialement foncée, notamment de coloris marron ou gris foncé, blanchit au cours du temps.

La demande de brevet US 2004/071687 décrit quant à elle un procédé de traitement de surfaces en polymère, notamment en PVC, permettant leur rajeunissement, ainsi qu'une méthode permettant de sélectionner les solvants organiques devant être utilisés pour de tels traitements. Ce document décrit notamment une composition de nettoyage pour le traitement de surfaces vinyliques comprenant huit différents solvant parmi lesquels l'ethyl-3-ethoxypropionate, l'acétate de butyle, le toluène, l'éthylène glycol monobutyl éther acétate, l'acétone, le 1,2,4-trimethylbenzene, le 1,3,5-trimethylbenzene, un distillat de pétrole aliphatique, et des distillats de pétrole aromatiques. L'utilisation d'un mélange de neuf solvants est complexe et coûteuse. En outre, il est connu l'utilisation de composés cétoniques conduit à des phénomènes de dégradation du PVC avec formation de molécules organiques colorées, de sortes que le nettoyage ainsi réalisé peut être lui même responsable d'un nouvel épisode de vieillissement anormal avec coloration de la surface. Enfin, le procédé décrit dans D1 ne contient pas d'étape de rinçage ni de protection.

Il reste néanmoins toujours la solution de repeindre la surface pour remédier au problème d'évolution de la coloration de la surface d'objets vieillis naturellement. Cette solution présente néanmoins plusieurs inconvénients. Tout d'abord, le polymère dégradé n'est ni "réparé" ni retiré des objets. Ensuite, il n'est pas possible de garantir la stabilité de la coloration des objets peints. Enfin, ceux-ci sont fragilisés par la peinture elle-même.

Une autre solution est de procéder à l'abrasion de la couche des objets dont la coloration s'est dégradée par vieillissement naturel, puis de repolir les objets. Ce procédé est néanmoins coûteux en main d'oeuvre. En outre, il s'applique difficilement dans les coins et sur les dormants au voisinage des murs et sa réalisation fine demande du personnel affûté. Par ailleurs, la tenue au vieillissement des objets abrasés et repolis est médiocre.

En définitive, le seul moyen fiable pour remédier au problème des objets vieillis naturellement en surface est alors leur remplacement pur et simple mais cette opération entraîne des débours importants. En outre, le fait de devoir remplacer prématurément des objets en PVC nuit à son image, tout particulièrement dans des applications où une longue durée de vie est souvent exigée, comme c'est le cas dans le domaine du bâtiment.

A la date de la présente invention, il existe donc un besoin d'identifier une solution pour restaurer la coloration de la surface d'objets en PVC, en particulier de tels objets vieillis naturellement en surface, qui ne présente pas les inconvénients présentés par les procédés de l'art antérieur.

La présente invention vise à pallier les inconvénients précités en proposant un procédé simple et peu couteux permettant le traitement d'une surface en polymère, ladite surface comprenant du PVC, en particulier de surfaces vieillies naturellement.

La présente invention a donc pour objet un procédé de traitement d'une surface en polymère comprenant du polychlorure de vinyle comprenant dans l'ordre :

- une étape de nettoyage de la surface au moyen d'une solution de nettoyage exempte de peroxyde organique et comprenant au moins un solvant organique liquide dans les conditions de nettoyage choisi parmi les esters d'acide carboxylique, la cyclohexanone, le tétrahydrofurane, les mélanges de N,N-diméthyloctanamide et de N,N-diméthyldécanamide, et les mélanges de ceux-ci, ;
- une étape optionnelle de rinçage de la surface obtenue à l'issue de l'étape de nettoyage; et
- une étape de protection selon laquelle on enduit la surface obtenue au moyen d'une solution filmogène comprenant un solvant et un polymère soluble dans ce solvant.

Le procédé selon l'invention présente de nombreux avantages. Tout d'abord, il permet de restaurer durablement la coloration de surface en polychlorure de vinyle (PVC), c'est-à-dire qu'il permet de restaurer un bon niveau de brillance grâce à l'enduction au moyen de la solution filmogène comprenant un polymère et que la coloration ainsi restaurée n'évolue pas dans les mois, voire dans les années, qui suivent le traitement. Ipso facto, le procédé selon l'invention évite le remplacement pur et simple des objets vieillis naturellement en surface, lequel remplacement est une opération coûteuse et nuisant à l'image du PVC.

De plus, le procédé selon l'invention est très simple à mettre en oeuvre, y compris par du personnel non spécialisé. En outre, il est peu coûteux. La restauration d'un objet ne requiert pas un démontage de l'objet à traiter. Par ailleurs, le coût en matières premières des solutions de traitement est faible.

Le procédé selon l'invention présente également le grand avantage d'apporter une solution aux problèmes de vieillissement accidentel des objets, en particulier des profilés, en PVC qui est à la fois conforme aux réglementations environnementales en vigueur et conforme à la diversité des mécanismes qui peuvent être rencontrés. Grâce au procédé selon l'invention, les objets altérés retrouvent leur coloration initiale et sont protégés de l'exposition aux UV.

Dans le cadre de la présente invention :

- on entend par « surface en polymère comprenant du polychlorure de vinyle », toute surface ou tout objet préparé à partir d'une composition polymère comprenant du polychlorure de vinyle, ledit objet pouvant être formé, mis en oeuvre, fini ou semi-fini. A titre d'exemples d'objets pouvant être traités par le procédé selon l'invention, on peut notamment citer les tubes et les raccords, les profilés, les plaques et les pièces injectées, de préférence les plaques et les profilés, de façon toute à fait préférée, les profilés, notamment les profilés en tant que tels et les profilés assemblés pour fabriquer des objets finis, comme les portes (dont les portes de garage), les châssis de fenêtres, les volets (comme les volets battants, les volets roulants et les persiennes), les revêtements muraux et les bardages, les clôtures et les profilés d'ameublement ainsi que les systèmes de toiture (tels les gouttières) ;
- on entend par « surface vieillie naturellement», toute surface ou objet ayant, durant son utilisation, été exposé(e) à ou mis(e) en contact avec une source dégradante telle que la chaleur, le froid, la lumière artificielle, la lumière solaire, l'obscurité, la pluie, le brouillard, l'humidité de l'air ambiant, une solution solvante ou une solution détergente, et dont au moins une partie présente une coloration différente de celle de la surface d'origine ;
- on entend « par coloration différente » tout écart colorimétrique supérieur à 5 entre la coloration de la partie de la surface qui a vieilli et celle de la même partie lorsque celle-ci était neuve, ledit écart correspondant l'écart colorimétrique global dans l'espace CIELAB® (1976) : global dans l'espace CIELAB® (1976) :

$$\Delta E_{ab}* = \sqrt{(L*_v - L*_n)^2 + (a*_v - a*_n)^2 + (b*_v - b*_n)^2}$$

où L* est la luminance, a* est la chromaticité selon l'axe vert-rouge et b* est la chromaticité selon l'axe jaune-bleu ; l'indice v sous L*, a* et b* fait référence à la partie de la surface qui a vieilli, tandis que l'indice n fait référence à la même partie lorsque l'objet était neuf;

- on entend par « polychlorure de vinyle » ou « PVC » tout polymère contenant au moins 50%, de préférence au moins 60%, de préférence encore au moins 70%, de préférence encore au moins 75% et de façon tout à fait préférée au moins 85% en poids d'unités monomériques dérivées du chlorure de vinyle (monomère). Ces polymères sont avantageusement soit des homopolymères du chlorure de vinyle (contenant 100 % en poids d'unités dérivées du chlorure de vinyle) ou des copolymères du chlorure de vinyle avec un ou plus d'un monomère éthyléniquement insaturé (appelé comonomère) choisi parmi les monomères vinyliques fluorés tels que le fluorure de vinylidène, les esters vinyliques comme l'acétate de vinyle, les monomères acryliques et méthacryliques comme l'acrylate de n-butyle et le méthacrylate de méthyle, les monomères styréniques comme le styrène et les monomères oléfiniques comme l'éthylène, le propylène et le butadiène. Le polychlorure de vinyle est de préférence un homopolymère du chlorure de vinyle ou un copolymère du chlorure de vinyle avec l'acétate de vinyle et de manière particulièrement préférée un homopolymère du chlorure de vinyle ;

- on entend par « acétate de butyle » aussi bien l'acétate de n-butyle que l'acétate de sec-butyle, que l'acétate de tert-butyle et que leurs mélanges ;
- on entend par « enduire » toute enduction ou imprégnation permettant de déposer une solution sur une surface afin d'obtenir un film protecteur après séchage ; et
- on entend par « filtre UV » tout un agent absorbant le rayonnement ultraviolet tels que l'hydroquinone et ses éthers diéthylique et diméthylique ; le triparachlorophénylstybine ; les dérivés de la benzophénone tels que la 2-hydroxy-4-méthoxybenzophénone, la 2,2'-dihydroxy-4,4'-diméthoxybenzo-phénone et la 2-hydroxy-4-n-octyloxybenzophénone ; les dérivés de la benzotriazole tels que la 2-[2'-hydroxy-5-méthylphényl]-benzotriazole et la 2-[2'-hydroxy-3',5'-(di-t-butyl)phényl]-benzotriazole ; les dérivés du naphtalène tels que le benzolacétométhylnaphtalène et le furfurylidène-acétométhylnaphtalène ; les dérivés de l'acide salicylique tels que le salicylate de phényle, le monobenzoate de résorcinol, le salicylate de p-tert-butylphényle ; les dérivés de l'acide benzoïque ; les dérivés de l'oxalanilide tels que la 2-éthyl-2'-éthoxyoxalanilide ; ou les dérivés cétoniques tels que la β-méthyl-ombelliférone et la dypnone.

Le procédé selon la présente invention peut être utilisé pour traiter toute surface en polymère comprenant du polychlorure de vinyle. Le procédé selon la présente invention peut notamment être utilisé pour traiter les surfaces vieillis naturellement. A titre d'exemple, le procédé selon la présente invention peut être utilisé pour traiter une surface vieillie naturellement qui était originellement blanche et qui a acquis une coloration à dominante jaune, orange, marron, rose, rouge, brune ou grise. Le procédé selon la présente invention peut également être utilisé pour traiter une surface vieillie naturellement qui était originellement colorée et qui a subi un phénomène de blanchiment lors du vieillissement.

Le procédé selon la présente invention peut néanmoins également être utilisé pour traiter des surfaces en polymère comprenant du comprenant du polychlorure de vinyle juste après leur réalisation ou après un temps d'utilisation relativement court, qui ne sont pas nécessairement vieillis naturellement en surface, notamment pour leur donner ou pour restaurer un bon niveau de brillance.

Les surfaces susceptibles d'être traitées par le procédé selon la présente invention peuvent comprendre, outre un polychlorure de vinyle, un agent stabilisant thermique. A titre d'exemples d'agent stabilisant thermique, on peut citer les sels, organiques ou inorganiques, d'étain, de baryum, de calcium, de cadmium, de zinc et de plomb, ainsi que les oxydes et les hydroxydes de ces métaux. De préférence, l'agent stabilisant thermique contient du plomb, du calcium ou du zinc.

Les surfaces susceptibles d'être traitées par le procédé selon la présente invention peuvent comprendre, outre les composants susmentionnés, des additifs usuels tels que les plastifiants, les agents renforçant au choc, les charges, les pigments dont notamment le dioxyde de titane, les lubrifiants internes, les lubrifiants externes, les diluants, les agents régulateurs de viscosité, les agents moussants, les agents fongicides, les agents bactéricides.

Le procédé de traitement selon l'invention comprend une étape de nettoyage selon laquelle on nettoie la surface de l'objet au moyen d'une solution de nettoyage comprenant au moins un solvant organique choisi parmi les esters d'acide carboxylique, la cyclohexanone, le THF, les mélanges de N,N-diméthyloctanamide et de N,N-diméthyldécanamide, et les mélanges de ceux-ci, et qui est liquide dans les conditions de nettoyage. De préférence, la solution de nettoyage utilisée dans le cadre du procédé selon la présente invention possède tout ou partie des caractéristiques suivantes :

- la solution de nettoyage est exempte d'hydrocarbure chloré tel que le dichlorométhane ;
- la solution de nettoyage est exemplte de peracide organique tel que l'acide peracétique ; et/ou
- la solution de nettoyage comprend au moins un ester d'acide carboxylique choisi parmi l'acétate d'éthyle, l'acétate de butyle, les esters d'acide dicarboxylique (de préférence les mélanges d'adipate de diméthyle, de glutarate de diméthyle et de succinate de diméthyle, les mélanges d'adipate de diisobutyle, de glutarate de diisobutyle et de succinate de diisobutyle et le 2-méthylpentanedioate de diméthyle), le 5-(diméthylamino)-2-méthyl-5-oxopentanoate de méthyle et les mélanges de ceux-ci. De préférence, la solution de nettoyage comprend un ester d'acide carboxylique choisi parmi l'acétate d'éthyle, l'acétate de butyle, le 5-(diméthylamino)-2-méthyl-5-oxopentanoate de méthyle. De façon tout à fait préférée, la solution de nettoyage comprend l'acétate d'éthyle éventuellement à un ou plusieurs autres esters d'acide carboxylique tels que l'acétate de butyle et/ou du 5-(diméthylamino)-2-méthyl-5-oxopentanoate de méthyle. Selon une première variante, la solution de nettoyage comprend uniquement de l'acétate d'éthyle.

Selon une seconde variante, la solution de nettoyage comprend de l'acétate d'éthyle et du 5-(diméthylamino)-2-méthyl-5-oxopentanoate de méthyle. Selon cette seconde variante, la solution de nettoyage comprend alors avantageusement de 25 à 75% en volume d'acétate d'éthyle et de 75 à 25 % en volume de 5-(diméthylamino)-2-méthyl-5-oxopentanoate de méthyle. Elle comprend de préférence de 40 à 60% en volume d'acétate d'éthyle et de 60 à 40 % en volume de 5-(diméthylamino)-2-méthyl-5-oxopentanoate de méthyle. La solution de nettoyage comprend de manière particulièrement préférée 60% en volume d'acétate d'éthyle et 40% en volume de 5-(diméthylamino)-2-méthyl-5-oxopentanoate de méthyle.

La préparation de la solution de nettoyage est réalisée avantageusement en mélangeant les constituants de la solution de manière à obtenir un liquide homogène. Tout procédé de mélange connu de l'homme du métier peut être utilisé.

Les mélanges de N, N-diméthyloctanamide et de N,N-diméthyldécanamide sont avantageusement des produits commerciaux comme notamment le produit commercial RHODIASOLV® ADMA810.

Les mélanges d'adipate de diméthyle, de glutarate de diméthyle et de succinate de diméthyle sont avantageusement des produits commerciaux comme notamment le s produit commercial RHODIASOLV® RDPE.

Les mélanges d'adipate de diisobutyle, de glutarate de diisobutyle et de succinate de diisobutyle sont avantageusement des produits commerciaux comme notamment le produit commercial RHODIASOLV® DIB.

Le 2-méthylpentanedioate de diméthyle est avantageusement un produit commercial tel le produit commercial RHODIASOLV® IRIS.

Le 5-(diméthylamino)-2-méthyl-5-oxopentanoate de méthyle est avantageusement un produit commercial tel le produit commercial RHODIASOLV® POLARCLEAN.

L'étape de nettoyage du procédé selon la présente invention consiste avantageusement en une dissolution superficielle de la surface. Les solvants organiques mentionnés présentent ainsi avantageusement une affinité chimique avec le PVC. Cette affinité chimique peut être mise en évidence par un test simple consistant à déposer sur un objet en PVC une goutte du solvant organique à tester, à laisser ce solvant en contact pendant 5 minutes, à essuyer l'excédent et à vérifier si le solvant a conduit à un ramollissement de la surface et si celle-ci présente un toucher collant.

Dans le cadre du procédé selon la présente invention, l'étape de nettoyage de la surface consiste avantageusement à faire diffuser la solution de nettoyage dans la couche superficielle de l'objet. Le nettoyage consiste de préférence à enduire/imprégner la surface de l'objet au moyen de la solution de nettoyage. La solution de nettoyage est ensuite avantageusement éliminée par essuyage. L'enduction/l'imprégnation de la surface au moyen de la solution de nettoyage peut être effectuée par des mouvements à sens unique ou de va-et-vient. En outre, elle est avantageusement effectuée en frottant la surface. L'enduction/l'imprégnation de la surface au moyen de la solution de nettoyage peut être effectuée par tout moyen approprié, par exemple au moyen d'un tissu ou d'un non-tissé. De préférence, elle est effectuée au moyen d'un tissu ou d'un non-tissé, avantageusement imbibé avec la solution de nettoyage.

Lorsque la forme des objets à traiter le permet, le tissu peut être fixé à un outil d'enduction. Celui-ci comprend avantageusement une plaquette rigide, qui supporte le tissu, et une poignée.

Le traitement de nettoyage est avantageusement réalisé sur l'entièreté de la surface qui a été exposée à une source dégradante ou a été mise en contact avec une telle source. Ceci vaut même si seulement une partie de la surface exposée à une coloration différente de celle qu'avait la surface de l'objet lorsqu'il était neuf, juste après avoir été mis en oeuvre. A titre d'exemple, si les objets sont des châssis de fenêtre, leur face extérieure a avantageusement été exposée dans son entièreté à la lumière solaire ; le traitement de nettoyage porte alors avantageusement sur l'entièreté de la face extérieure de ces châssis, même si seulement une partie de cette face extérieure présente une altération de la coloration.

Le nettoyage est avantageusement effectué au moins jusqu'à ce que la totalité de la surface à traiter soit mouillée par la solution de nettoyage et jusqu'à la restauration d'une coloration uniforme et proche du coloris initial.

Il peut être nécessaire d'appliquer plusieurs fois successivement le traitement au moyen de la solution de nettoyage pour restaurer stablement la coloration.

La température de l'air ambiant dans lequel on traite la surface des objets au moyen de la solution de nettoyage est avantageusement inférieure à 40°C, de préférence inférieure à 35°C, et de manière particulièrement préférée inférieure à 30°C. En outre, elle est avantageusement supérieure à 0°C, de préférence supérieure 10°C et de manière particulièrement préférée supérieure à 15°C.

Enfin, l'étape de nettoyage du procédé selon la présente invention peut être avantageusement précédée d'une étape de dépoussiérage. Cette étape de dépoussiérage est de préférence réalisée au moyen d'un tissu/chiffon sec et/ou en lavant au moyen d'une eau savonneuse.

L'étape de rinçage du procédé selon la présente invention est optionnelle. et peut être effectuée par tout moyen connu. De préférence, l'étape de rinçage du procédé selon la présente invention est effectuée au moyen d'acétate d'éthyle. Celui-ci peut être appliqué par tout moyen connu, par exemple à l'aide d'un tissu ou d'un non tissé imbibé d'acétate d'éthyle.

L'étape de rinçage peut-être suivie si nécessaire d'une étape de séchage, par exemple pour retirer l'acétate d'éthyle utilisé lors de l'étape de rinçage. Cette étape de séchage peut être réalisée ou non en fonction des conditions externes. Ainsi, si la température externe est basse, il peut être requis soit d'attendre un peu afin que le séchage s'opère soit d'accélérer celui-ci par tout moyen connu. Par contre, si la température externe est plus élevée, le séchage peut être immédiat et il peut ne pas être requis de réaliser une étape de séchage spécifique.

Enfin, le procédé selon la présente invention contient une étape de protection selon laquelle on enduit la surface obtenue au moyen d'une solution filmogène comprenant un solvant et un polymère soluble dans ce solvant. De préférence, l'étape de protection du procédé selon la présente invention possède tout ou partie des caractéristiques suivantes :

- le solvant de la solution filmogène est choisi parmi l'acétate d'éthyle, l'acétate de butyle et les mélanges de ceux-ci. De préférence encore, le solvant est l'acétate de butyle.
- le polymère soluble utilisé dans le cadre de l'étape de protection du procédé selon la présente invention peut être tout polymère soluble permettant l'obtention d'une solution filmogène présentant une tenue au vieillissement. De préférence, le polymère soluble est un polymère du méthacrylate de méthyle. De préférence encore, le polymère soluble est un homopolymère du méthacrylate de méthyle.
- la solution filmogène contient au moins 1% en poids, de préférence encore au moins 5% en poids, et de façon tout à fait préférée au moins 7% en poids de polymère soluble (par rapport au poids total de la solution filmogène) ;
- la solution filmogène contient au plus 20% en poids, de préférence encore au plus 15% en poids, et de façon tout à fait préférée au plus 12% en poids de polymère soluble (par rapport au poids total de la solution filmogène) ;
- la solution filmogène contient de 7% à 12% en poids de polymère soluble (par rapport au poids total de la solution filmogène) ;
- la solution filmogène comprend en outre un agent anti-UV protégeant contre le rayonnement ultraviolet. De préférence, l'agent anti UV est avantageusement choisi parmi les agents complexants comme les complexes du nickel (II) et les phosphites organiques, les phénols et les amines encombrés stériquement comme le butylhydroxytoluène et l'éthylène bis-pipérazinone, et les filtres UV. De façon tout à fait préférée, l'agent anti UV est choisi parmi les dérivés de la benzophénone et de la benzotriazole ; et/ou
- la solution filmogène est exempte de tout autre additif que le solvant, le polymère soluble dans ce solvant et l'agent anti-UV, et la solution filmogène contient au moins 75% en poids, de préférence au moins 81% en poids, et de façon tout à fait préférée au moins 85% en poids de solvant (par rapport au poids total de la solution filmogène), et au plus 98.9% en poids, de préférence au plus 94.5% en poids, et de façon tout à fait préférée au plus 92% en poids de solvant (par rapport au poids total de la solution filmogène). De façon tout à fait préférée, la solution filmogène contient alors de 85% à 92% en poids de solvant (par rapport au poids total de la solution filmogène).

La présence de l'agent anti UV dans la solution filmogène utilisée dans le cadre du procédé selon la présente invention permet d'obtenir une tenue à la lumière et à la chaleur remarquable, supérieure à celle de l'objet neuf.

La solution filmogène contient préférentiellement au moins 0.1% en poids, de préférence encore au moins 0.5% en poids, et de manière tout à fait préférée au moins 1% en poids d'agent anti-UV (par rapport au poids total de la solution filmogène). La solution filmogène contient préférentiellement au plus 5% en poids, de préférence encore au plus 4% en poids et de façon tout à fait préférée au plus 3% en poids d'agent anti-UV (par rapport au poids total de la solution filmogène). De façon tout à fait préférée, la solution filmogène contient de 1% et 3% en poids d'agent anti-UV (par rapport au poids total de la solution filmogène).

Le poids d'agent anti UV qui est retenu à la surface des objets après que le traitement ait été effectué, exprimé en gramme par m$^2$, est préférentiellement d'au moins 0,005 g/m$^2$, de préférence encore au moins 0,05 g/m$^2$ et de façon tout à fait préférée au moins 0,25 g/m$^2$; et est en outre au plus de 50 g/m$^2$, de préférence encore au plus de 10 g/m$^2$ et de façon tout à fait préférée au plus de 5 g/m$^2$.

La solution de filmogène utilisée dans le cadre du procédé selon la présente invention peut être obtenue en mélangeant les constituants de la solution de manière à obtenir un liquide homogène. Tout procédé de mélange connu de l'homme du métier peut être utilisé. De préférence, la solution de protection est préparée en introduisant l'agent anti UV et le polymère soluble dans le solvant sous agitation continue. La température à laquelle la solution de protection est préparée varie avantageusement avec les ingrédients de la solution. De préférence, la solution de protection est préparée à une température modérée comprise entre 25 et 40°C.

L'enduction/l'imprégnation de la surface de l'objet au moyen de la solution de protection peut être effectuée par tout moyen approprié, par exemple au moyen d'un pinceau, d'une brosse, d'un tissu ou d'un non-tissé. De préférence, elle est effectuée au moyen d'un tissu ou d'un non-tissé, avantageusement imbibé avec la solution de protection.

La présente invention est illustrée de manière non limitative par les exemples suivants.

### Exemple 1

1.1- Description des objets à traiter

Le traitement a été effectué sur une menuiserie produite à partir d'une composition en PVC stabilisée au Ca/Zn, plus précisément sur la partie extérieure d'un ouvrant et sur la partie extérieure des dormants initialement blanche présentant après vieillissement de quelques années une coloration anormale (jaunissement jusqu'à une teinte presque marron) sur certaines zones très localisées.

La menuiserie a tout d'abord été dépoussiérée avec un chiffon sec avant traitement.

1.2 - Préparation de la solution de nettoyage

*Composition volumique :*

    Acétate d'éthyle : 60%
RHODIASOLV® POLARCLEAN (5-(diméthylamino)-2-méthyl-5-oxopentanoate de méthyle) : 40%

Ces deux constituants ont été mélangés de manière à obtenir un liquide homogène.

1.3 -Application de la solution de nettoyage

L'application a été réalisée avec un non-tissé doux et imbibé de la solution de nettoyage. Plusieurs passages ont été effectués en frottant légèrement, avec renouvellement de l'imprégnation, voire le changement du non-tissé lorsque celui-ci était trop sali, jusqu'à obtention d'un résultat jugé conforme.

1.4-Application du solvant de rinçage

Après application du traitement de nettoyage, le profilé a été rincé à plusieurs reprises avec un non tissé imbibé d'acétate d'éthyle. Cette étape a permis de limiter la quantité de solvant peu volatile restant sur le profilé et d'en accélérer le séchage.

1.5 - Préparation de la solution de protection

*Composition :*

    Acétate de n-butyle : 100 g
Agent anti UV TINUVIN® 328 : 2 g
Granulés de PMMA PLEXIGLAS® 7N: 10 g

*Mode opératoire:*

Introduction de l'agent anti UV TINUVIN® 328 et des granulés de PMMA PLEXIGLAS® 7N dans l'acétate de n-butyle sous agitation et solubilisation des 2 solides à température modérée (25-40°C) sous agitation continue en remuant avec un agitateur.

1.6 - Application de la solution de protection

L'application a été réalisée avec un non-tissé doux et imbibé de solution de protection. L'application a été réalisée lentement de manière à déposer sur le profilé un film uniforme de la solution, qui a conduit après séchage à un film protecteur.

Cette application n'a pas engendré de modification visible à l'oeil nu du coloris obtenu après le traitement de nettoyage. Par contre, l'application de la solution de protection a permis d'obtenir un meilleur niveau de brillance du profilé.

Après le traitement, la coloration anormale avait disparu et on a observé un retour au coloris blanc initial. Le coloris obtenu après traitement correspondait à celui de la matière qui n'avait jamais été exposée à la lumière naturelle comme le montrent le résultat des mesures colorimétriques, effectuées au moyen du spectrophotomètre MINOLTA CM3610d, ci-dessous.

Le même profilé a aussi été traité en utilisant simplement l'acétate d'éthyle comme solution de nettoyage et non le mélange acétate d'éthyle/ RHODIASOLV® POLARCLEAN.

Les mesures de coloris sur le profilé avant et après les différents traitements sont reprises dans le tableau suivant :

|  | L* | a* | b* |
|---|---|---|---|
| Coloris de la face vieillie avant traitement | 87.96 | -0.46 | 8.95 |
| Coloris après traitement acétate d'éthyle | 90.34 | -0.6 | 3.97 |
| Coloris après traitement mélange acétate d'éthyle/RHODIASOLV® POLARCLEAN | 91.04 | -0.59 | 2.28 |
| Coloris de la face non exposée du profilé | 90.2 | -0.38 | 2.23 |

Le traitement avec l'acétate d'éthyle a permis de récupérer en grande partie le coloris initial comme l'indique la comparaison de la valeur du L* et celle du b* avec les valeurs équivalentes de la face vieillie avant traitement et celles de la face non exposée du profilé. Le traitement avec le mélange acétate d'éthyle/ RHODIASOLV® POLARCLEAN a permis quant à lui d'améliorer encore plus significativement la valeur de la composante jaune-bleue (valeur du b*).

### Exemple 2

Le traitement d'un profilé coloré marron produit à partir d'une composition de PVC ayant fortement blanchi après vieillissement a été réalisé selon le mode opératoire détaillé à l'exemple 1 considérant:

- le nettoyage du profilé avec le mélange acétate d'éthyle/ RHODIASOLV® POLARCLEAN 60/40 ;
- le rinçage du profilé avec l'acétate d'éthyle ; et
- la protection avec la solution filmogène acétate de n-butyle / PMMA PLEXIGLAS® 7N / agent anti UV TINUVIN® 328.

Les mesures de coloris sur le profilé avant et après traitement, effectuées au moyen du spectrophotomètre MINOLTA CM3610d, sont reprises dans le tableau suivant :

|  | L* | a* | b* |
|---|---|---|---|
| Coloris de la face vieillie avant traitement | 66.2 | 7.9 | 13.75 |
| Coloris après traitement mélange acétate d'éthyle/ RHODIASOLV® POLARCLEAN | 47.23 | 23.91 | 22.97 |
| Coloris de la face non exposée du profilé | 46.9 | 23.88 | 22.83 |

Il apparaît des données ci-dessus que le coloris initial du profilé a été intégralement restauré.

### Exemple 3

Le traitement d'un profilé blanc produit à partir d'une composition de PVC stabilisée au plomb et ayant pris une coloration légèrement rose après vieillissement, a été réalisé selon le mode opératoire détaillé à l'exemple 1 considérant:

- le nettoyage du profilé avec le mélange acétate d'éthyle/ RHODIASOLV® POLARCLEAN 60/40;
- le rinçage du profilé avec l'acétate d'éthyle; et
- la protection avec la solution filmogène acétate de n-butyle / PMMA PLEXIGLAS 7N / agent anti UVTINUVIN® 328.

Les mesures de coloris sur le profilé avant et après traitement, effectuées au moyen du spectrophotomètre MINOLTA CM3610d, sont reprises dans le tableau suivant:

|  | L* | a* | b* |
|---|---|---|---|
| Coloris de la face vieillie avant traitement | 92.34 | 0.63 | 6.1 |
| Coloris après traitement mélange acétate d'éthyle/RHODIASOLV® POLARCLEAN | 95.48 | -0.19 | 3.53 |

(suite)

|  | L* | a* | b* |
|---|---|---|---|
| Coloris de la face non exposée du profilé | 95.37 | -0.13 | 3.38 |

Il apparaît des données ci-dessus que le traitement selon l'invention a permis de restaurer intégralement le coloris initial du profilé.

## Revendications

1.   Procédé de traitement d'une surface en polymère comprenant un polychlorure de vinyle, comprenant dans l'ordre :

   - une étape de nettoyage de la surface au moyen d'une solution de nettoyage exempte de peroxyde organique et comprenant au moins un solvant organique liquide dans les conditions de nettoyage choisi parmi les esters d'acide carboxylique, la cyclohexanone, le tétrahydrofurane, les mélanges de N,N-diméthyloctanamide et de N,N-diméthyldécanamide, et les mélanges de ceux-ci,;
   - une étape optionnelle de rinçage de la surface de l'objet obtenu à l'issue de l'étape de nettoyage; et
   - une étape de protection selon laquelle on enduit la surface obtenue au moyen d'une solution filmogène comprenant un solvant et un polymère soluble dans ce solvant.

2.   Procédé selon la revendication 1, **caractérisé en ce que** la solution de nettoyage comprend au moins un ester d'acide carboxylique choisi parmi l'acétate d'éthyle, l'acétate de butyle, les esters d'acide dicarboxylique, le 5-(diméthylamino)-2-méthyl-5-oxopentanoate de méthyle et les mélanges de ceux-ci.

3.   Procédé selon la revendication 1 ou 2, **caractérisé en ce que** la solution de nettoyage comprend de l'acétate d'éthyle et du 5-(diméthylamino)-2-méthyl-5-oxopentanoate de méthyle.

4.   Procédé selon la revendication 3, **caractérisé en ce que** la solution de nettoyage comprend de 25 à 75% en volume d'acétate d'éthyle et de 75 à 25 % en volume de 5-(diméthylamino)-2-méthyl-5-oxopentanoate de méthyle.

5.   Procédé selon l'une quelconque des revendications 1 à 4, **caractérisé en ce que** l'étape de rinçage est effectuée et **en ce qu'**elle l'est au moyen d'acétate d'éthyle.

6.   Procédé selon l'une quelconque des revendications 1 à 5, **caractérisé en ce que** le solvant de la solution filmogène est l'acétate de butyle.

7.   Procédé selon l'une quelconque des revendications 1 à 6, **caractérisé en ce que** le polymère soluble est un polymère du méthacrylate de méthyle.

8.   Procédé selon l'une quelconque des revendications 1 à 7, **caractérisé en ce que** la quantité de polymère soluble dans la solution filmogène est comprise entre 7 et 12% en poids par rapport au poids total de la solution filmogène.

9.   Procédé selon l'une quelconque des revendications 1 à 8, **caractérisé en ce que** la solution filmogène comprend en outre un agent anti-UV.

10.   Procédé selon la revendication 9, **caractérisé en ce que** la solution filmogène contient de 1% à 3% en poids d'agent anti-UV.

Europäisches
Patentamt

European
Patent Office

Office européen
des brevets

**RAPPORT DE RECHERCHE EUROPEENNE**

Numéro de la demande

EP 15 16 6761

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | US 2004/071867 A1 (STUART ALAN [US]) 15 avril 2004 (2004-04-15) <br> * alinéa [0002] - alinéa [0003] * <br> * alinéa [0008] * <br> * alinéa [0021] * <br> * alinéa [0032] - alinéa [0034] * <br> * revendications 1-3; tableau 1 * <br> ----- | 1,2,6-10 | INV. C08J7/02 |
| Y | GB 2 099 331 A (MONTEDISON SPA) 8 décembre 1982 (1982-12-08) <br> * page 1, ligne 5 - ligne 8 * <br> * page 1, ligne 24 - ligne 26 * <br> * page 1, ligne 35 - ligne 37 * <br> * page 2, ligne 58 - ligne 61 * <br> * revendications 1-7 * <br> ----- | 1,2,6-10 | |
| Y | US 2006/068131 A1 (HANRAHAN KEVIN [US]) 30 mars 2006 (2006-03-30) <br> * alinéa [0025] * <br> * revendication 1; exemple 2 * <br> ----- | 1,2,8 | |
| Y | US 3 460 961 A (YOUNG RAYMOND H JR ET AL) 12 août 1969 (1969-08-12) <br> * revendication 9 * <br> ----- | 1,2 | DOMAINES TECHNIQUES RECHERCHES (IPC) <br> C08J <br> C09G |
| A | US 2014/121148 A1 (WINGET RICHARD [US] ET AL) 1 mai 2014 (2014-05-01) <br> * alinéa [0030] * <br> * alinéa [0035] * <br> * revendications 1,12,13 * <br> ----- | 1-10 | |
| A | DE 28 08 005 A1 (SOLVAY WERKE GMBH) 30 août 1979 (1979-08-30) <br> * exemples 2,3 * <br> ----- | 1-10 | |
| A | DE 17 04 870 A1 (NORDDEUTSCHE AFFINERIE) 8 juillet 1971 (1971-07-08) <br> * page 2, alinéa 2 * <br> * revendication 1 * <br> ----- | 1-10 | |

Le présent rapport a été établi pour toutes les revendications

| Lieu de la recherche | Date d'achèvement de la recherche | Examinateur |
|---|---|---|
| La Haye | 1 octobre 2015 | Matthijssen, J-J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 15 16 6761

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-10-2015

| Document brevet cité au rapport de recherche | Date de publication | Membre(s) de la famille de brevet(s) | Date de publication |
|---|---|---|---|
| US 2004071867 A1 | 15-04-2004 | AUCUN | |
| GB 2099331 A | 08-12-1982 | DE 3219648 A1 | 16-12-1982 |
| | | EG 15734 A | 30-12-1986 |
| | | ES 8305800 A1 | 16-07-1983 |
| | | FR 2506774 A1 | 03-12-1982 |
| | | GB 2099331 A | 08-12-1982 |
| | | GR 76415 B | 10-08-1984 |
| | | IT 1137236 B | 03-09-1986 |
| | | ZA 8203588 A | 30-03-1983 |
| US 2006068131 A1 | 30-03-2006 | CA 2581040 A1 | 06-04-2006 |
| | | CN 101022948 A | 22-08-2007 |
| | | EP 1827812 A2 | 05-09-2007 |
| | | JP 5031571 B2 | 19-09-2012 |
| | | JP 2008514403 A | 08-05-2008 |
| | | KR 20070072496 A | 04-07-2007 |
| | | US 2006068131 A1 | 30-03-2006 |
| | | WO 2006036409 A2 | 06-04-2006 |
| US 3460961 A | 12-08-1969 | BE 679825 A | 21-10-1966 |
| | | DE 1644850 A1 | 30-07-1970 |
| | | FR 1487348 A | 07-07-1967 |
| | | GB 1152351 A | 14-05-1969 |
| | | SE 339061 B | 27-09-1971 |
| | | US 3460961 A | 12-08-1969 |
| US 2014121148 A1 | 01-05-2014 | AUCUN | |
| DE 2808005 A1 | 30-08-1979 | AUCUN | |
| DE 1704870 A1 | 08-07-1971 | AUCUN | |

EPO FORM P0460

Pour tout renseignement concernant cette annexe : voir Journal Officiel de l'Office européen des brevets, No.12/82

**EP 2 942 364 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2003025050 A
- US 2004071687 A